# EUROPEAN PATENT APPLICATION

(11) **EP 2 251 765 A2**
(43) Date of publication of application: **17.11.2010**
(21) Application number: 10160100.3
(22) Date of filing: 15.04.2010
(51) Int. Cl.: G06F 1/26, G06F 13/00

(54) **USB power supply circuit**

(30) Priority: 11.05.2009 JP 2009114137
(71) Applicant: Funai Electric Co., Ltd., Daito-shi Osaka 574-0013 (JP)
(72) Inventor: Yasuda, Takashi, Osaka 574-0013 (JP)
(74) Representative: Beetz & Partner

(57) **Abstract**

A USB power supply circuit includes a constant voltage output power supply circuit (1), a switching device (2), a bus power line (BP) which is connected to a voltage output line of the constant voltage output power supply circuit (1) via the switching device (2), a USB connector (9) having a VBUS terminal which is connected to the bus power line (BP), a plurality of voltage divider resistors connected in series between the bus power line (BP) and the ground, and a control microcomputer which monitors a voltage between two voltage divider resistors among the voltage divider resistors in the state where the switching device (2) is turned on, and turns off the switching device (2) if it is detected that the voltage becomes equal to or lower than a first threshold value.

## Description

### BACKGROUND OF THE INVENTION

### Field of the Invention

The present invention relates to a power supply circuit for supplying power to a universal serial bus (USB) device.

### Description of Related Art

In these days, there are various types of equipment to which a USB device such as a USB memory can be connected. Such equipment is provided with a power supply circuit for supplying power to the USB device (hereinafter referred to as a USB power supply circuit).

As an example of the USB power supply circuit, JP-A-2005-184904 discloses a USB power supply circuit which prevents rush current by controlling current flowing from the USB power supply circuit to the USB device to be equal to or lower than a predetermined current value for a predetermined time when it is detected that a USB device is connected via a USB connector.

However, the USB power supply circuit disclosed in JP-A-2005-184904 cannot detect overcurrent if it flows in a bus power line of the USB power supply circuit due to a breakdown or the like of the USB device, so that fire or other accident may occur.

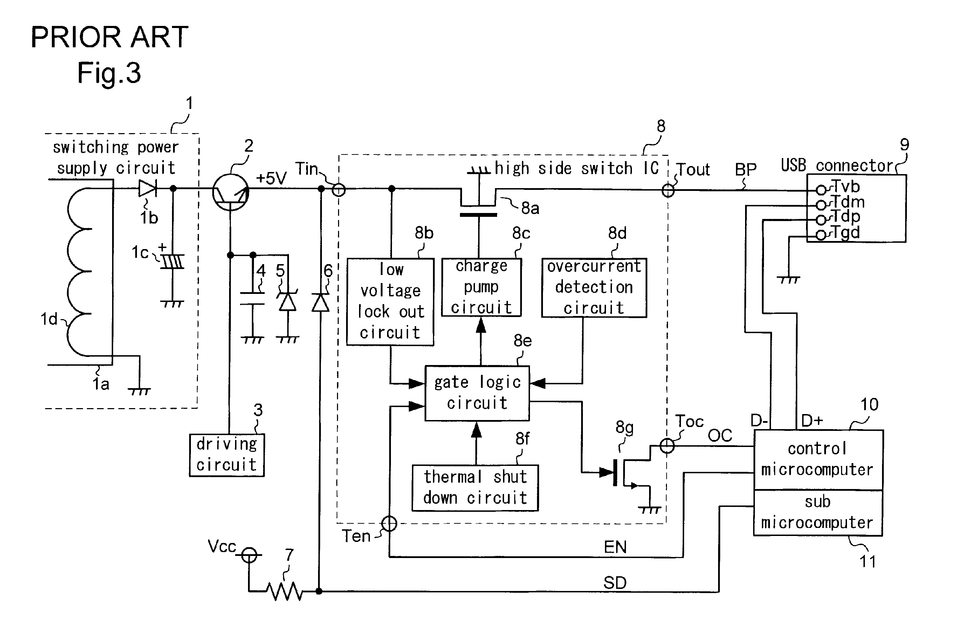

Therefore, there is a conventional USB power supply circuit having a structure as illustrated in Fig. 3.

The conventional USB power supply circuit illustrated in Fig. 3 includes a switching power supply circuit 1 that is a constant voltage output power supply circuit, a transistor 2, a driving circuit 3, a capacitor 4, a Zener diode 5, a diode 6, a pull-up resistor 7, a high side switch IC 8, a USB connector 9, a control microcomputer 10, and a sub microcomputer 11.

The structure of the switching power supply circuit 1 illustrated in Fig. 3 is a structure near only a voltage output portion. The switching power supply circuit 1 includes, as known well, a full-wave rectification circuit, a smoothing capacitor, a switching device, a feedback circuit, a control circuit (which are not illustrated), and in addition, a transformer 1a, a diode 1b, and a capacitor 1c. A voltage generated in a secondary coil 1d of the transformer 1a is rectified by the diode 1b and is smoothed by the capacitor 1c to be an output voltage (5V) of the switching power supply circuit 1.

The voltage output line of the switching power supply circuit 1 is connected to a collector of the transistor 2. In addition, a base of the transistor 2 is connected to the driving circuit 3, an end of the capacitor 4, and a cathode of the Zener diode 5. The other end of the capacitor 4 and an anode of the Zener diode 5 are connected to the ground. The driving circuit 3 controls on and off of the transistor 2. In addition, the capacitor 4 and the Zener diode 5 adjust base current of the transistor 2.

An emitter of the transistor 2 is connected to a cathode of the diode 6. An anode of the diode 6 is connected to an end of the pull-up resistor 7 and the sub microcomputer 11. The other end of the pull-up resistor 7 is connected to a pull-up power supply Vcc.

The high side switch IC 8 includes terminals of a power supply input terminal Tin, a power switch output terminal Tout, a power switch enable input terminal Ten, and an overcurrent notice output terminal Toc, a MOSFET 8a, a low voltage lock out circuit 8b, a charge pump circuit 8c, an overcurrent detection circuit 8d, a gate logic circuit 8e, a thermal shut down circuit 8f, and an NMOS 8g.

The power supply input terminal Tin is connected to an emitter of the transistor 2, the low voltage lock out circuit 8b, and a drain of the MOSFET 8a. A source of the MOSFET 8a is connected to an end of the bus power line BP via the power switch output terminal Tout, and a gate of the MOSFET 8a is connected to the charge pump circuit 8c.

The gate logic circuit 8e delivers a control signal for controlling the gate voltage of the MOSFET 8a to the charge pump circuit 8c. The charge pump circuit 8c multiplies the voltage of the control signal supplied from the gate logic circuit 8e, and the multiplied voltage is applied to a gate of the MOSFET 8a.

The gate logic circuit 8e receives an enable signal EN from the control microcomputer 10 via the power switch enable input terminal Ten and controls the MOSFET 8a to be turned on and off in accordance with a level of the received enable signal EN.

The overcurrent detection circuit 8d can detect overcurrent flowing in the bus power line BP. If overcurrent is detected, the detection is sent to the gate logic circuit 8e, so that the gate logic circuit 8e restricts output current of the MOSFET 8a.

When the low voltage lock out circuit 8b detects a decrease in the voltage of the power supply input terminal Tin, the detection is sent to the gate logic circuit 8e so that the gate logic circuit 8e turns off the MOSFET 8a.

When the thermal shut down circuit 8f detects that temperature of the chip exceeds a predetermined temperature while the overcurrent restriction state continues, the detection is sent to the gate logic circuit 8e so that the gate logic circuit 8e turns off the MOSFET 8a.

The gate logic circuit 8e is connected to a gate of the NMOS 8g. A drain of the NMOS 8g is connected to an overcurrent notice output terminal Toc, and a source of the NMOS 8g is connected to the ground.

When the gate logic circuit 8e receives a detection notice from the overcurrent detection circuit 8d or the thermal shut down circuit 8f, it notifies the control microcomputer 10 about the overcurrent by an overcurrent notice signal OC via the NMOS 8g.

The USB connector 9 can be connected to a USB device (not shown) and includes a VBUS terminal Tvb for supplying power, a D+ terminal Tdp and a D-terminal Tdm for data communication, and a GND terminal Tgd for the ground.

The VBUS terminal Tvb is connected to an end of the bus power line BP, and power is supplied to the USB device via the VBUS terminal Tvb. The D+ terminal Tdp and the D- terminal Tdm are connected to the control microcomputer 10 so that the control microcomputer 10 and the USB device perform bidirectional communication via the D+ terminal Tdp and the D- terminal Tdm.

When the equipment (such as a TV set) with the USB power supply circuit having the above-mentioned structure is powered on, the driving circuit 3 receives a energization signal so as to turn on the transistor 2. In addition, the control microcomputer 10 outputs the enable signal EN of a High level to the gate logic circuit 8e so that the gate logic circuit 8e turns on the MOSFET 8a. Thus, power is supplied to the USB device via the bus power line BP.

In this state, if overcurrent flows in the bus power line BP due to a breakdown or the like of the USB device, the overcurrent detection circuit 8d detects the overcurrent and sends the detection to the gate logic circuit 8e so that the gate logic circuit 8e restricts the output current of the MOSFET 8a. Thus, the overcurrent is restricted so that fire or other accident can be prevented.

In addition, in the state where the power supply to the USB device is performed normally, the voltage at the anode of the diode 6 with the pull-up resistor 7 and the pull-up power supply Vcc is lower than the voltage at the cathode of the diode 6. Therefore, current does not flow in the diode 6. However, if a short circuit occurs in the capacitor 1c or other malfunction occurs, the voltage at the cathode of the diode 6 becomes lower than the voltage at the anode of the diode 6. Therefore, current flows in the diode 6 and the voltage at the anode of the diode 6 drops. Then, the sub microcomputer 11 detects the voltage drop of the short circuit detection signal SD and sends the notice to the control microcomputer 10. The control microcomputer 10 outputs the enable signal EN of a Low level to the gate logic circuit 8e so that the gate logic circuit 8e turns off the MOSFET 8a. Thus, it is possible to prevent an adverse effect to the USB device due to a short circuit on the USB power supply circuit side.

However, in the conventional USB power supply circuit, a threshold value for detecting overcurrent is determined by the high side switch IC. Therefore, a change of the threshold value means to select the high side switch IC again, which causes designing cost.

### SUMMARY OF THE INVENTION

It is an object of the present invention to provide a USB power supply circuit that can reduce designing cost when changing a threshold value for detecting overcurrent in the USB power supply circuit that can prevent fire or other accident even if overcurrent occurs due to a breakdown or the like of the USB device.

In order to achieve the above-mentioned object, the present invention proposes an USB power supply circuit according to claim 1, wherein a structure of the USB power supply circuit includes a constant voltage output power supply circuit, a switching device, a bus power line which is connected to a voltage output line of the constant voltage output power supply circuit via the switching device, a USB connector having a VBUS terminal which is connected to the bus power line, and may be **characterized in that** the USB power supply circuit further includes
a plurality of voltage divider resistors connected in series between the bus power line and the ground, and
a control microcomputer which monitors a voltage between two voltage divider resistors among the voltage divider resistors in the state where the switching device is turned on, and turns off the switching device if it is detected that the voltage becomes equal to or lower than a first threshold value.

According to this structure, if overcurrent flows in the bus power line due to a breakdown or the like of the USB device that is connected to the USB connector, a voltage of the bus power line is lowered. Then, the control microcomputer detects that the voltage between the voltage divider resistors becomes equal to or lower than the first threshold value and turns off the switching device. Thus, overcurrent does not flow, so that fire or other accident can be prevented.

In addition, when a threshold value of current value to be regarded as overcurrent is changed in design, it is sufficient to change at least one of a voltage division ratio of the voltage divider resistors and software of the control microcomputer. Therefore, it is possible to reduce designing cost.

In addition, in the above-mentioned structure, it is possible to adopt a structure in which the number of the voltage divider resistors is two.

According to this structure, compared with the case where the conventional high side switch IC is used, two voltage divider resistors work sufficiently so that a large cost merit can be obtained.

In addition, in any one of the above-mentioned structures, the control microcomputer may turn off the switching device also when it is detected that the voltage becomes equal to or higher than a second threshold value that is higher than the first threshold value.

According to this structure, if an excess voltage is applied to the bus power line due to a breakdown or the like of the USB device, the control microcomputer detects that the voltage between the voltage divider resistors becomes equal to or higher than the second threshold value and turns off the switching device. Therefore, it is possible to suppress an adverse effect from the USB device to the USB power supply circuit.

In addition, the USB power supply circuit having any one of the above-mentioned structures may be disposed in video and audio equipment, for example.

### BRIEF DESCRIPTION OF THE DRAWINGS

Fig. 1 is a diagram illustrating a structural example of a USB power supply circuit according to the present invention.
Fig. 2 is a flowchart related to an abnormal state monitoring operation of the USB power supply circuit according to the present invention.
Fig. 3 is a diagram illustrating a structural example of a conventional USB power supply circuit.

### DETAILED DESCRIPTION OF THE PREFERRED EMBODIMENTS

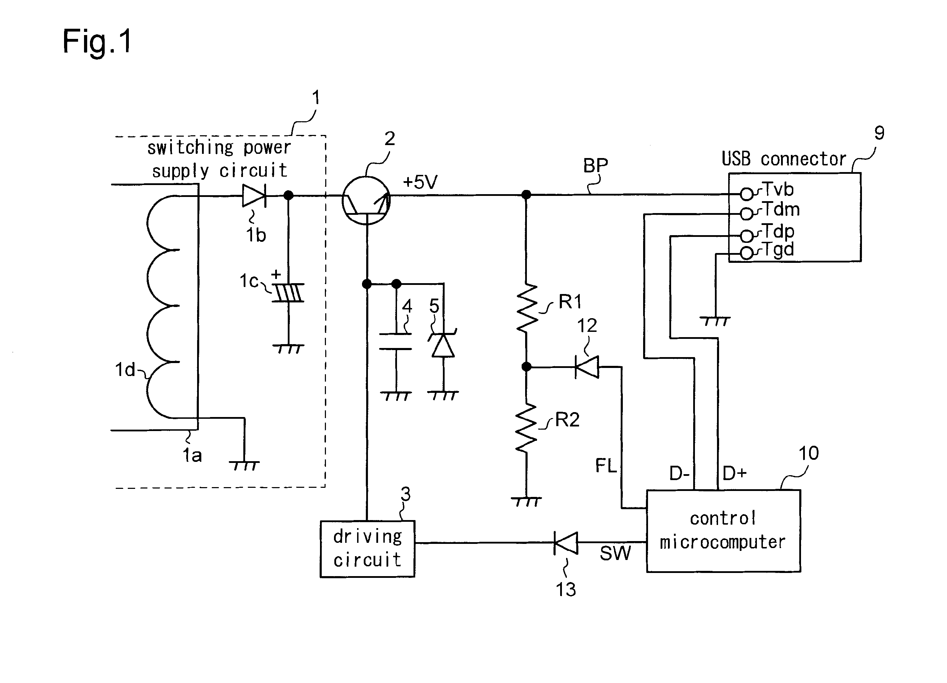

Hereinafter, an embodiment of the present invention will be described with reference to the attached drawings. Fig. 1 illustrates a structural example of a USB power supply circuit according to the present invention. The same structural element as the above-mentioned conventional USB power supply circuit illustrated in Fig. 3 is denoted by the same reference numeral, and a difference between the present embodiment and the conventional USB power supply circuit will be described in particular.

The high side switch IC 8 and the structural elements for detecting a short circuit on the USB power supply circuit side (the diode 6, the pull-up resistor 7, the pull-up power supply Vcc, and the sub microcomputer 11) that are disposed in the conventional USB power supply circuit (illustrated in Fig. 3) are eliminated in the USB power supply circuit according to the present invention.

In the USB power supply circuit according to the present invention, the emitter of the transistor 2 is directly connected to an end of the bus power line BP, and the other end of the bus power line BP is connected to the VBUS terminal Tvb of the USB connector 9.

Then, the voltage divider resistors R1 and R2 are connected in series between the bus power line BP and the ground. The connection node of the voltage divider resistors R1 and R2 is connected to a cathode of a diode 12, and an anode of the diode 12 is connected to the control microcomputer 10. The diode 12 is inserted for preventing backward current to the control microcomputer 10 so that a breakdown of the control microcomputer 10 is avoided.

In addition, a cathode of a diode 13 is connected to the driving circuit 3, and an anode of the diode 13 is connected to the control microcomputer 10. The diode 13 is inserted for preventing backward current to the control microcomputer 10 so that a breakdown of the control microcomputer 10 is avoided.

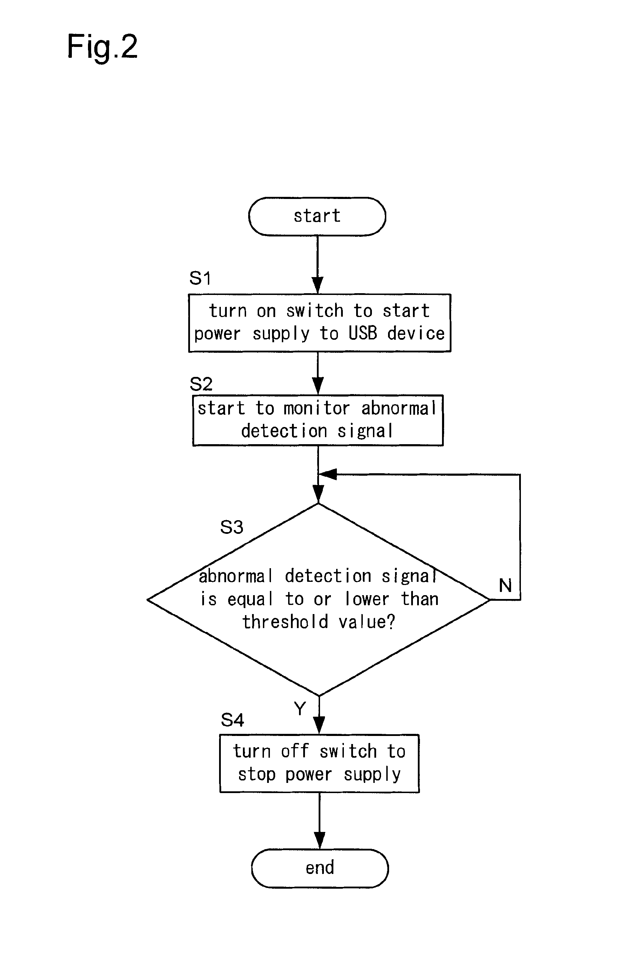

An abnormal state monitoring operation of the USB power supply circuit having the above-mentioned structure according to the present invention will be described with reference to the flowchart illustrated in Fig. 2.

When the equipment (such as a TV set) having the USB power supply circuit according to the present invention is powered on, the process flow illustrated in the flowchart of Fig. 2 is started.

First, in Step S1, the control microcomputer 10 outputs a switching signal SW of a High level to the driving circuit 3 so that the driving circuit 3 turns on the transistor 2. Thus, the output voltage of the switching power supply circuit 1 is supplied to the USB device (not shown) connected to the USB connector 9 via the bus power line BP and the VBUS terminal Tvb.

Next, in Step S2, the control microcomputer 10 starts to monitor the voltage at the connection node between the voltage divider resistors R1 and R2 as an abnormal detection signal FL.

Then, if the abnormal detection signal FL is higher than a predetermined threshold value (N in Step S3), the control microcomputer 10 continues the monitoring. If the abnormal detection signal FL becomes the predetermined threshold value or lower (Y in Step S3), the process flow goes to Step S4, in which the control microcomputer 10 outputs the switching signal SW of a Low level to the driving circuit 3 so that the driving circuit 3 turns off the transistor 2. Thus, the power supply to the USB device is stopped.

If overcurrent flows in the bus power line BP due to a breakdown or the like of the USB device, a voltage of the bus power line BP is dropped. The threshold value should be set to a partial voltage of the voltage of the bus power line BP divided by the voltage divider resistors R1 and R2 in the case where current having the threshold value of current value regarded as overcurrent flows in the bus power line BP.

When overcurrent flows in the bus power line BP due to a breakdown or the like of the USB device, the control microcomputer 10 detects that the abnormal detection signal FL is the threshold value or lower. Therefore, the transistor 2 is turned off so that the overcurrent is stopped to flow. Thus, fire or other accident can be prevented.

In addition, when the threshold value of current value regarded as overcurrent is changed in design, it is sufficient to change at least one of a voltage division ratio of the voltage divider resistors R1 and R2 and software of the control microcomputer 10, so that a design change is easy and designing cost can be reduced. In addition, compared with the case where the conventional high side switch IC is used, a large merit in cost can be obtained because only the two voltage divider resistors can work sufficiently

In addition, if a short circuit occurs in the capacitor 1c of the switching power supply circuit 1 or the like, for example, the voltage of the bus power line BP is dropped, and the abnormal detection signal FL is also dropped. Therefore, the control microcomputer 10 detects that the abnormal detection signal FL is the threshold value or lower. Thus, the transistor 2 is turned off, so that adverse effect to the USB device due to the short circuit in the USB power supply circuit side can be prevented. In other words, unlike the conventional USB power supply circuit (Fig. 3), it is not necessary to dispose the additional structure for detecting a short circuit in the USB power supply circuit side (diode 6, pull-up resistor 7, pull-up power supply Vcc, and sub microcomputer 11).

Although an embodiment of the present invention is described above, the embodiment can be modified variously within the scope of the spirit of the present invention.

For instance, as to the threshold value of the abnormal detection signal FL, it is possible to set, in addition to the above-mentioned threshold value (first threshold value), a second threshold value that is higher than the first threshold value, so that the transistor 2 is turned off if the abnormal detection signal FL becomes equal to or lower than the first threshold value or equal to or higher than the second threshold value.

Thus, for example, in the case where the USB device works with power supply not from the bus power but from a commercial power supply, if excess voltage is applied to the bus power line BP due to a breakdown of the USB device, the control microcomputer 10 detects that the abnormal detection signal FL is equal to or higher than the second threshold value. Therefore, the transistor 2 is turned off, so that adverse effect from the USB device to the USB power supply circuit can be suppressed.

In addition, three or more voltage divider resistors may be used without limiting to two.

Note that the USB power supply circuit according to the present invention can be disposed in video and audio equipment such as a TV set, a DVD recorder, a Blu-ray Disc recorder, a DVD player and the like.

The above description, the claims and the drawings show multiple features of the invention in specific combinations. The skilled person will easily be able to consider other combinations or sub-combinations of these features to adapt the invention to his specific needs without leaving the scope of the invention as defined in the independent claims.

## Claims

1. A USB power supply circuit comprising a constant voltage output power supply circuit (1), a switching device (2), a bus power line (BP) which is connected to a voltage output line of the constant voltage output power supply circuit (1) via the switching device (2), a USB connector (9) having a VBUS terminal which is connected to the bus power line (BP), **characterized in that** the USB power supply circuit further comprises
a plurality of voltage divider resistors (R1, R2) connected in series between the bus power line (BP) and the ground, and
a control microcomputer (10) which monitors a voltage between two voltage divider resistors (R1, R2) among the voltage divider resistors in the state where the switching device (2) is turned on, and turns off the switching device (2) if it is detected that the voltage becomes equal to or lower than a first threshold value.

2. A USB power supply circuit according to claim 1, **characterized in that** the number of the voltage divider resistors (R1, R2) is two.

3. A USB power supply circuit according to claim 1 or 2, **characterized in that** the control microcomputer (10) turns off the switching device (2) also when it is detected that the voltage becomes equal to or higher than a second threshold value that is higher than the first threshold value.

4. A video and audio device equipped with a USB power supply circuit according to any one of claims 1 to 3.
